# EUROPEAN PATENT APPLICATION

(11) **EP 4 564 193 A1**
(43) Date of publication of application: **04.06.2025**
(21) Application number: 24213086.2
(22) Date of filing: 14.11.2024
(51) Int. Cl.: G06F 16/73, G06F 16/74, G06F 16/951

(54) **METHOD, APPARATUS, DEVICE AND STORAGE MEDIUM FOR MEDIA CONTENT INTERACTION**

(30) Priority: 28.11.2023 CN 202311607059
(71) Applicant: Beijing Youzhuju Network Technology Co., Ltd., Beijing 101299 (CN)
(72) Inventor: BU, Yanru, Beijing, 100028 (CN); XIE, Ziqiang, Beijing, 100028 (CN); ZHOU, Ge, Beijing, 100028 (CN); CHEN, Yuzhong, Beijing, 100028 (CN); MA, Jianzhe, Beijing, 100028 (CN); WEI, Minglun, Beijing, 100028 (CN); DENG, Junxi, Beijing, 100028 (CN); ZHANG, Enbei, Beijing, 100028 (CN); KONG, Weijia, Beijing, 100028 (CN); CHENG, Yaqian, Beijing, 100028 (CN); MU, Qiaohan, Beijing, 100028 (CN); LING, Chen, Beijing, 100028 (CN); WANG, Chen, Beijing, 100028 (CN); ZHANG, Jinming, Beijing, 100028 (CN)
(74) Representative: Dentons UK and Middle East LLP

(57) **Abstract**

According to embodiments of the present disclosure, there are provided a method, apparatus, device and storage medium for media content interaction. The method includes: in response to a predetermined operation for an application, presenting, in the application, media content associated with a target object; and presenting, while presenting the media content, a search entry for the target object and a search keyword associated with the target object. In this way, it can facilitate users to further understand the target object. Thus, on the one hand, the user experience can be improved, and on the other hand, the promotion of the target object can be advantageously promoted.

## Description

### CROSS REFERENCE TO RELATED APPLICATIONS

This application claims priority to Chinese Patent Application No. 202311607059.2, entitled "METHOD, APPARATUS, DEVICE AND STORAGE MEDIUM FOR MEDIA CONTENT INTERACTION" filed on Nov. 28, 2023, the entirety of which is incorporated herein by reference.

### FIELD

Example embodiments of the present disclosure generally relate to the field of computers, and in particular to a method, apparatus, device and storage medium for media content interaction.

### BACKGROUND

With the development of computer technology, more and more applications are designed to provide various services to users. For example, a user can post, browse, comment on, and forward various media content in an application, including various media content such as videos, images, image sets, and audios. In some cases, it may be desirable to promote one or more objects through media content to make them more widely known.

### SUMMARY

In a first aspect of the present disclosure, there is provided a method of media content interaction. The method includes: in response to a predetermined operation for an application, presenting, in the application, media content associated with a target object; and presenting, while presenting the media content, a search entry for the target object and a search keyword associated with the target object.

In a second aspect of the present disclosure, there is provided an apparatus for media content interaction. The apparatus includes: a media content presentation module configured to, in response to a predetermined operation for an application, present, in the application, media content associated with a target object; and a search-related presentation module configured to present, while presenting the media content, a search entry for the target object and a search keyword associated with the target object.

In a third aspect of the present disclosure, there is provided an electronic device. The device includes at least one processing unit; and at least one memory coupled to the at least one processing unit and storing instructions executable by the at least one processing unit. The instructions, when executed by the at least one processing unit, cause the device to perform the method of the first aspect.

In a fourth aspect of the present disclosure, there is provided a computer readable storage medium having stored thereon a computer program executable by a processor to implement the method of the first aspect.

It should be understood that the content described in the SUMMARY section is neither intended to limit key features or important features of embodiments of the present disclosure, nor is it intended to limit the scope of the present disclosure. Other features of the present disclosure will be readily understood from the following description.

### BRIEF DESCRIPTION OF THE DRAWINGS

The above and other features, advantages and aspects of embodiments of the present disclosure will become more apparent with reference to the following DETAILED DESCRIPTION taken in conjunction with the accompanying drawings. In the drawings, the same or similar reference numerals represent the same or similar elements, where:
FIG. 1 shows a schematic diagram of an example environment in which embodiments of the present disclosure can be implemented;
FIG. 2A and FIG. 2B show schematic diagrams of example interfaces for presenting media content according to some embodiments of the present disclosure;
FIG. 3A shows a schematic diagram of an example interface including a search page according to some embodiments of the present disclosure;
FIG. 3B shows a schematic diagram of an example interface for presenting search results according to some embodiments of the present disclosure;
FIG. 4A shows a schematic diagram of an example interface for switching presented media contents according to some embodiments of the present disclosure;
FIG. 4B shows a schematic diagram of an example interface for presenting another media content according to some embodiments of the present disclosure;
FIG. 5 shows a flowchart of a process of media content interaction according to some embodiments of the present disclosure;
FIG. 6 shows a block diagram of an apparatus for generating media content interaction according to some embodiments of the present disclosure; and
FIG. 7 shows a block diagram of a device capable of implementing a plurality of embodiments of the present disclosure.

### DETAILED DESCRIPTION

It can be understood that, before using the technical solutions disclosed in the embodiments of the present disclosure, the user should be notified of the type, the use range, the use scenario, and the like of the personal information involved in the present disclosure and authorized by the user in an appropriate manner according to related laws and regulations.

For example, when an active request of a user is received, prompt information is sent to the user to explicitly prompt the user, and an operation requested to be performed by the user needs to obtain and use personal information of the user. Therefore, the user can autonomously select, according to the prompt information, whether to provide personal information to software or hardware such as an electronic device, an application, a server or a storage medium that performs the operations of the technical solutions of the present disclosure.

As an optional but non-limiting implementation manner, in response to receiving an active request of the user, a manner of sending prompt information to the user, for example, a manner of popping up a window, the pop-up window may present the prompt information in a text manner. In addition, the pop-up window may further carry a selection control for the user to select "agree" or "disagree" to provide personal information to the electronic device.

It should be understood that the foregoing process of notifying and acquiring user authorization is merely illustrative and does not constitute a limitation on the implementations of the present disclosure, and other manners that meet related laws and regulations may also be applied to the implementations of the present disclosure.

It can be understood that data (including but not limited to the data itself, the acquisition or use of the data) involved in this technical solution should comply with requirements of corresponding laws and regulations and related rules.

The embodiments of the present disclosure will be described in more detail below with reference to the accompanying drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and embodiments of the present disclosure are only for illustrative purposes and are not intended to limit the scope of protection of the present disclosure.

It should be noted that titles of any section/subsection provided herein are not limiting. Various embodiments are described throughout this document, and any type of embodiment may be included under any section/subsection. Moreover, the embodiments described in any section/subsection may be combined in any manner with any other embodiments described in the same section/subsection and/or different section/subsection.

Herein, unless it is clearly stated, performing a step "in response to A" does not mean that the step is performed immediately after "A", but may include one or more intermediate steps.

In the description of the embodiments of the present disclosure, the term "include" and similar terms should be understood as open inclusion, that is, "include but not limited to". The term "based on" should be understood as "at least partially based on". The term "an embodiment" or "the embodiment" should be understood as "at least one embodiment". The term "some embodiments" should be understood as "at least some embodiments". Other explicit and implicit definitions may also be included below. The terms first", "second", etc. may refer to different or the same objects. Other explicit and implicit definitions may also be included below.

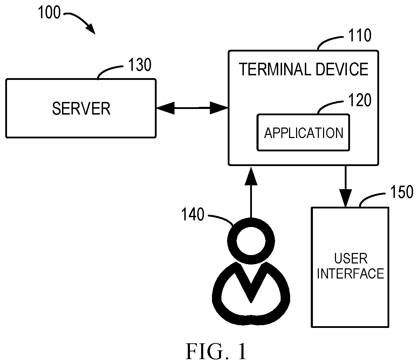

FIG. 1 shows a schematic diagram of an example environment 100 in which the embodiments of the present disclosure can be implemented. In this example environment 100, an application 120 is installed in a terminal device 110. A user 140 may interact with the application 120 via the terminal device 110 and/or an attachment device of the terminal device 110. The application 120 may be a social application, a content sharing application, a shopping application, etc., or any other suitable application.

In the environment 100 of FIG. 1, if the application 120 is in an active state, the terminal device 110 may present a user interface 150 of the application 120. The user interface 150 may include various interfaces that can be provided by the application 120, such as a content presentation interface, a content creation interface, a content posting interface, a content forwarding interface, a messaging interface, a personal home page, and the like. The media content that can be presented in the application 120 may include various suitable types of content, such as, but not limited to, videos, audios, image sets, a combination of images and audios, a combination of images and texts, and the like.

In some cases, the media content presented in the application 120 may be associated with an object to be promoted (also referred to as a target object). For example, the media content may be a video for introducing the target object. Such a target object may include any physical object or virtual object. Examples of physical objects may include, but are not limited to, plants, animals, articles, etc., and examples of virtual objects may include, but are not limited to, film and television works, virtual characters, etc. For example, the media content may be a popular science video, through which the popular science object in the video can be known to more people. Such media content for object promotion is also called promotional content. In contrast, media content that is not used for object promotion may be referred to as non-promotional content.

In some embodiments, the terminal device 110 communicates with a server 130 to implement the provision of services for the application 120. The terminal device 110 may be any type of mobile terminal, fixed terminal or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a positioning device, a TV receiver, a radio broadcast receiver, an e-book device, a gaming device, or any combination thereof, including accessories and peripherals of these devices or any combination thereof. In some embodiments, the terminal device 110 can also support any type of user-specific interface (such as a "wearable" circuit, etc.). The server 130 may be various types of computing systems/servers capable of providing computing power, including, but not limited to, mainframes, edge computing nodes, computing devices in a cloud environment, and the like.

It should be understood that the structure and function of each element in the environment 100 are described for illustrative purposes only, without suggesting any limitation to the scope of the present disclosure.

As briefly mentioned above, in some cases, it is desired to promote one or more objects through media contents. By watching the media contents, a user may be interested in the promoted object and hopes to know more about the promoted object. Conventionally, the user may need to manually open a search page and manually input a keyword to search for the promoted object. This reduces the user experience and efficiency. On the other hand, due to such a cumbersome search process, some users may give up further understanding of the promoted object. In this way, the promotion efficiency of the object is also affected.

In view of this, the embodiments of the present disclosure provide a solution for media content interaction. According to the embodiments of the present disclosure, if a predetermined operation for an application is detected, media content associated with a target object to be promoted is presented in the application. While the media content is presented, a search entry for the target object and a search keyword associated with the target object are presented.

In the embodiments of the present disclosure, while the media content is presented, not only the search entry is provided to the user, but also a suitable search keyword is provided. In this way, it can facilitate users to further understand the target object. Thus, on the one hand, the user experience can be improved, and on the other hand, the promotion of the target object can be advantageously promoted.

The example embodiments of the present disclosure are described in detail below with continued reference to the accompanying drawings. In addition, it should be understood that although the example embodiments of the present disclosure are mainly described by taking object promotion as an example, the solution for media content interaction of the present disclosure may be applied to any type of media content, not limited to object promotion.

### Example Interfaces and Interactions

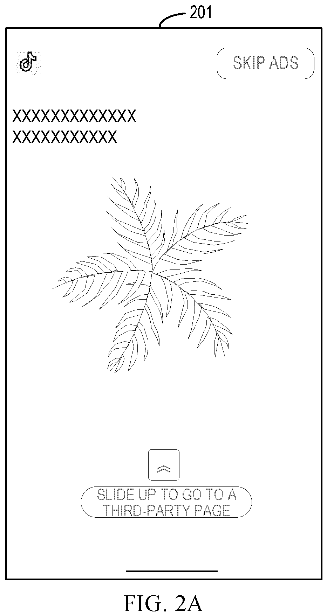

Example interfaces and interactions will be described with reference to FIG. 1. If a predetermined operation for the application 120 is detected, the terminal device 110 may present, in the application 120, media content associated with a target object. The target object may, for example, be an object to be promoted, as described above with reference to FIG. 1. An example is described with reference to FIG. 2A. In an interface 201 shown in FIG. 2A, the media content related to plants, such as a video, is presented.

In some embodiments, the predetermined operation for the application 120 may be that the application 120 is started. In such an embodiment, the presented media content associated with the target object is the first content presented after the application 120 is started. In some other embodiments, the predetermined operation for the application 120 may also be other suitable operations, for example, a page associated with the target object is accessed, and the like.

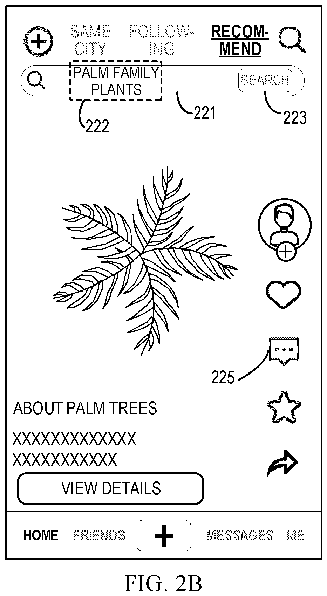

While the media content is presented, the terminal device 110 may present a search entry for the target object and a search keyword associated with the target object. Refer to an example user interface shown in FIG. 2B. Compared to FIG. 2A, in addition to the media content, the interface further shows other elements. Specifically, a search entry 221 for the target object and a search keyword 222 associated with the target object are shown. In this example, the target object is a palm tree, and accordingly, the search keyword 222 is "palm family plants".

The search keyword may be customized for the target object, for example, customized by a promoter of the target object. It can be understood that generally the promoter has a more accurate and comprehensive understanding of the promoted object. With the search keyword customized by the promoter for the target object can help the user to better search for information related to the target object.

The terminal device 110 may present the search entry and the search keyword simultaneously with the media content in any suitable manner. For example, in the example of FIG. 2B, the search entry 221 and the search keyword 222 are superposed on the media content. For another example, the media content may be presented in a certain interface region, and the search entry and the search keyword may be presented in another interface region. In some embodiments, the terminal device 110 may determine in which manner to present the media content, the search entry, and the search keyword simultaneously according to its own device type or the specific size of the display.

In some embodiments, the presentation of the search entry and the search keyword is associated with a change in the presentation mode of the media content. For example, in response to a predetermined operation for the application 120, the terminal device 110 may first present the media content in a first mode. Then, in response to an event related to the media content, the terminal device 110 switches the presentation mode of the media content from the first mode to a second mode different from the first mode. The switching here may be a direct switching or a gradual switching. The event related to the media content may, for example, include that a duration of presenting the media content in the first mode reaching a predetermined duration. For another example, the event related to the media content may include a first predetermined user operation for the media content being received. For example, the user makes a trigger action on a predetermined position of the presentation interface of the media content, for example, a single click, a double click, etc.

Such a second mode may be a presentation mode that allows the media content, the search entry, and the search keyword to be presented simultaneously. In this way, the terminal device 110 may present the search entry and the search keyword while presenting the media content in the second mode. In some embodiments, the second mode may be an information flow mode. In such an embodiment, the presented content may be regarded as a portion of the information flow.

An example is described with reference to FIG. 2A and FIG. 2B. In response to the application 120 being started, the terminal device 110 first presents the media content in the first mode. In this example, such a first mode may be regarded as a full-screen mode. In response to presenting the media content in the first mode for a predetermined duration, the terminal device 110 may switch to presenting the media content in the second mode. In the second mode, the search entry 221 and the search keyword 222 are also presented.

In some embodiments, in addition to presenting the search entry and the search keyword, the terminal device 110 may also present one or more operation controls (for example, the comment control 225 shown in FIG. 2B) or any suitable interface elements of the application 120 in a predetermined style together with the search entry and the search keyword. For example, if the second mode is an information flow mode, the predetermined style may be a general presentation style of the application 120 in the information flow mode. In such an embodiment, it can provide the user with a similar experience when watching promotional content as when watching ordinary content.

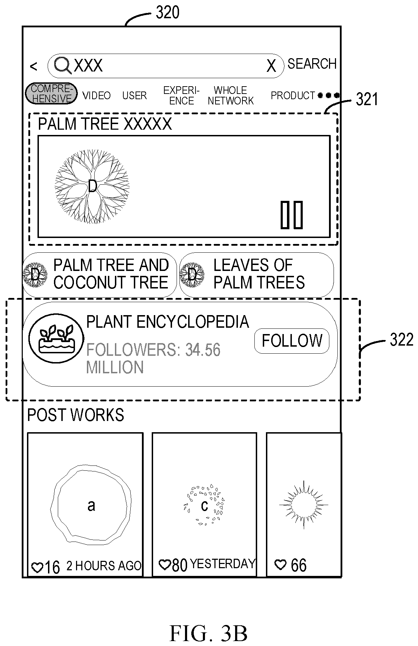

In some embodiments, if a search trigger operation for the target object is detected, the terminal device 110 may present a search result for the target object. The search result is obtained based on the search keyword described above. For example, for the example of FIG. 2B, if a search trigger operation is detected, the terminal device 110 may present a search result obtained based on the search keyword 222 "palm family plants". FIG. 3B shows a search result page 320 as an example.

In some embodiments, such a search trigger operation may include a first search control presented in association with the search entry being triggered. For example, in the example of FIG. 2B, a search control 223 is presented in the presentation region of the search entry 221. If the user triggers the search control 223, the terminal device 110 may present the search result page 320 as shown in FIG. 3B.

In some embodiments, such a search trigger operation may include the presentation of a search page and the triggering of a second search control in the search page. Specifically, if the search entry is triggered, the terminal device 110 may present a search page including the second search control, in which the search keyword is displayed in a keyword input region. If the second search control is triggered while the search keyword is displayed, the terminal device 110 may present a search result for the target object.

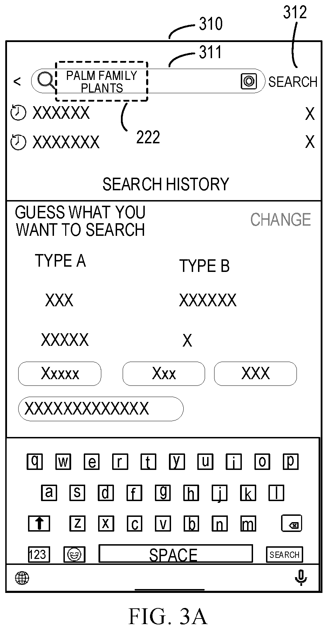

With continued reference to the example of FIG. 2B. If the user clicks on the search entry 221 or enters a text in the search entry 221, the terminal device 110 may present a search page 310 as shown in FIG. 3A, which includes a search control 312 and a keyword input region 311. The search keyword 222 is displayed in the keyword input region 311. In this case, if the user triggers the search control 312, the terminal device 110 may present the search result page 320 as shown in FIG. 3B.

In some embodiments, the presentation style of the search result may be customized for the target object, for example, may be customized by the promoter of the target object. The presentation style may include, but is not limited to, background color, font color, font style, font size, presentation order of different types of content, etc. of the search result presentation page.

Alternatively, or additionally, in some embodiments, at least a portion of contents included in the search result may be customized for the target object, for example, may be customized by the promoter of the target object. For example, such customized content may include other media content related to the target object. In the example of FIG. 3B, other media content associated with the target object is presented in the interface region 321. For another example, such customized content may include information of an account related to the target object, for example, an account name, an identification, etc. In the example of FIG. 3B, information of an account "plant encyclopedia" related to the target object is presented in the interface region 322.

With continued reference to FIG. 2B. In some embodiments, the presented media content may be switched. For example, if all of the media content has been presented, the terminal device 110 may stop presenting the media content, the search entry and the search keyword. In some embodiments, if a predetermined user operation for switching a presentation content is received, the terminal device 110 may stop presenting the media content, the search entry and the search keyword. For example, in the information flow mode, if the user makes a swipe gesture to bring up the next media content, the terminal device 110 may stop presenting the media content, the search entry and the search keyword.

In these embodiments, the stop of presenting the media content, the search entry and the search keyword may be an immediate stop of presenting, or a stop of presenting in a manner of gradually weakening the highlighting degree.

In this way, the terminal device 110 may in turn present a further media content that is a non-promotional content. In other words, the terminal device 110 implements the switching of the media contents.

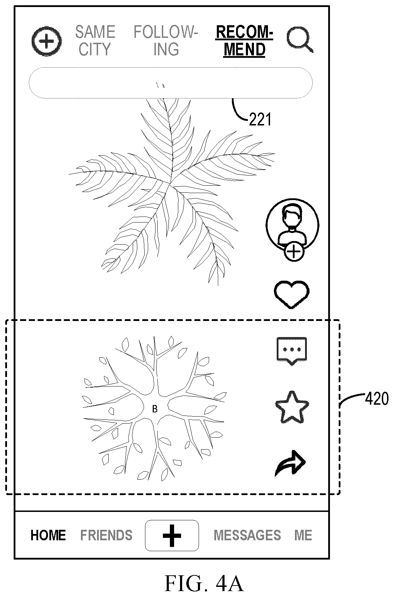

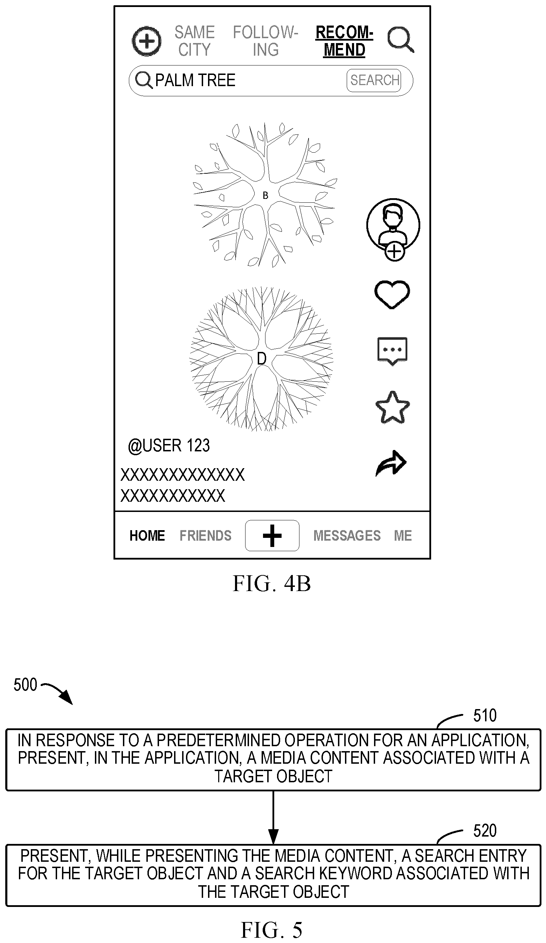

As an example, if the media content about the palm tree is presented or the user makes a swipe gesture on the interface as shown in FIG. 2B, the terminal device 110 may present an interface as shown in FIG. 4A. In this interface, the search keyword 222 is no longer presented. As shown in FIG. 4A, the presentation effect of the search entry 221 is also weakened. Meanwhile, in a region 420 of the interface, the next media content is presented. Then, as shown in FIG. 4B, the terminal device 110 presents the next media content in the information flow.

In such an embodiment, seamless switching between promotional and non-promotional contents can be achieved. If the user is not interested in the promoted object, the user can conveniently switch to the viewing of the non-promotional content.

### Example Process

FIG. 5 shows a flowchart of a process 500 for media interaction according to some embodiments of the present disclosure. The process 500 may be implemented at the terminal device 110.

At block 510, the terminal device 110 presents, in the application, media content associated with a target object in response to a predetermined operation for an application.

At block 520, the terminal device 110 presents, while presenting the media content, a search entry for the target object and a search keyword associated with the target object.

In some embodiments, the process 500 further includes: in response to an event related to the media content, switching a presentation mode of the media content from a first mode to a second mode different from the first mode; and presenting, while presenting the media content in the second mode, the search entry and the search keyword.

In some embodiments, the event includes at least one of: a duration of presenting the media content in the first mode reaching a predetermined duration, or a first predetermined user operation for the media content being received.

In some embodiments, the process 500 further includes: in response to a search trigger operation for the target object, presenting a search result for the target object, where the search result is obtained based on the search keyword.

In some embodiments, at least one of the following is customized for the target object: a presentation style of the search result, or at least a portion of content comprised in the search result.

In some embodiments, the process 500 further includes: in response to a first search control presented in association with the search entry being triggered, presenting the search result.

In some embodiments, the process 500 further includes: in response to the search entry being triggered, presenting a search page comprising a second search control, where the search keyword is displayed in a keyword input region of the search page; and in response to the second search control being triggered while the search keyword is displayed, presenting the search result.

In some embodiments, the search entry and the search keyword are superposed on the media content.

In some embodiments, the process 500 further includes: presenting, together with the search entry and the search keyword, one or more operation controls of the application in a predetermined style.

In some embodiments, the process 500 further includes: stopping presenting the media content, the search entry, and the search keyword in response to at least one of: all of the media content being presented, or a second predetermined user operation for switching a presentation content being received; and presenting a further media content that is a non-promotional content.

In some embodiments, the predetermined operation includes the application being started.

### Example Apparatus and Device

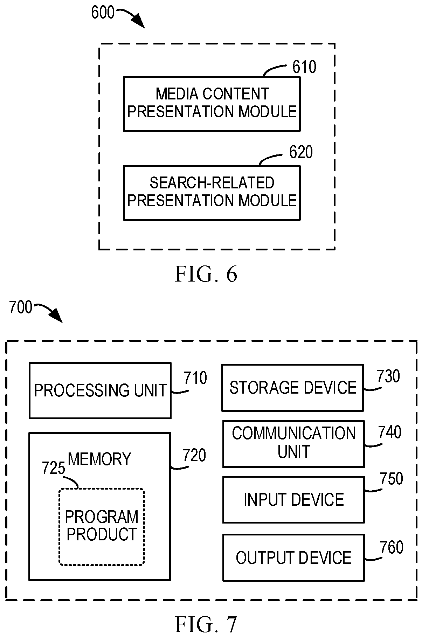

FIG. 6 shows a schematic block diagram of the structure of an apparatus 600 for media content interaction according to some embodiments of the present disclosure. The apparatus 600 may be implemented as or included in the terminal device 110. Various modules/components in the apparatus 600 may be implemented by hardware, software, firmware, or any combination thereof.

As shown in the figure, the apparatus 600 includes a media content presentation module 610 configured to, in response to a predetermined operation for an application, present, in the application, media content associated with a target object. The apparatus 600 further includes a search-related presentation module 620 configured to present, while presenting the media content, a search entry for the target object and a search keyword associated with the target object.

In some embodiments, the search-related presentation module 620 is configured to: in response to an event related to the media content, switch a presentation mode of the media content from a first mode to a second mode different from the first mode; and present, while presenting the media content in the second mode, the search entry and the search keyword.

In some embodiments, the event includes at least one of: a duration of presenting the media content in the first mode reaching a predetermined duration, or a first predetermined user operation for the media content being received.

In some embodiments, the apparatus 600 further includes: a search result presentation module configured to, in response to a search trigger operation for the target object, present a search result for the target object, where the search result is obtained based on the search keyword.

In some embodiments, at least one of the following is customized for the target object: a presentation style of the search result, or at least a portion of content comprised in the search result.

In some embodiments, the search result presentation module is further configured to, in response to a first search control presented in association with the search entry being triggered, present the search result.

In some embodiments, the search result presentation module is further configured to in response to the search entry being triggered, present a search page comprising a second search control, where the search keyword is displayed in a keyword input region of the search page; and in response to the second search control being triggered while the search keyword is displayed, present the search result.

In some embodiments, the search entry and the search keyword are superposed on the media content.

In some embodiments, the apparatus 600 further includes: an operation control presentation module configured to present, together with the search entry and the search keyword, one or more operation controls of the application in a predetermined style.

In some embodiments, the media content presentation module 610 is further configured to: present the media content, the search entry, and the search keyword in response to at least one of: all of the media content being presented, or a second predetermined user operation for switching a presentation content being received; and present a further media content that is a non-promotional content.

In some embodiments, the predetermined operation includes the application being started.

FIG. 7 illustrates a block diagram of an electronic device 700 in which one or more embodiments of the present disclosure may be implemented. It should be understood that the electronic device 700 shown in FIG. 7 is only an example and should not constitute any limitation on the functionality and scope of the embodiments described herein. The electronic device 700 as shown in FIG. 7 may be used to implement the electronic device 110.

As shown in FIG. 7, the electronic device 700 is in the form of a general computing device. The components of electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and can execute various processes based on the programs stored in the memory 720. In a multiprocessor system, multiple processing units execute computer executable instructions in parallel to improve the parallel processing capability of the electronic device 700.

The electronic device 700 typically includes multiple computer storage medium. Such medium may be any available medium that is accessible to the electronic device 700, including but not limited to volatile and non-volatile medium, removable and non-removable medium. The memory 720 may be volatile memory (for example, a register, cache, a random access memory (RAM)), a non-volatile memory (for example, a read-only memory (ROM), an electrically erasable programmable read-only memory (EEPROM), a flash memory), or any combination thereof. The storage device 730 may be any removable or non-removable medium, and may include a machine readable medium such as a flash drive, a disk, or any other medium, which may be used to store information and/or data and may be accessed within the electronic device 700.

The electronic device 700 may further include additional removable/non-removable, volatile/non-volatile storage medium. Although not shown in FIG. 7, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 720 may include a computer program product 725, which has one or more program units configured to perform various methods or acts of various embodiments of the present disclosure.

The communication unit 740 communicates with a further electronic device through the communication medium. In addition, functions of components in the electronic device 700 may be implemented by a single computing cluster or multiple computing machines, which can communicate through a communication connection. Therefore, the electronic device 700 may be operated in a networking environment using a logical connection with one or more other servers, a network personal computer (PC), or another network node.

The input device 750 may be one or more input devices, such as a mouse, a keyboard, a trackball, etc. The output device 760 may be one or more output devices, such as a display, a speaker, a printer, etc. The electronic device 700 may also communicate with one or more external devices (not shown) through the communication unit 740 as required. The external device, such as a storage device, a display device, etc., communicate with one or more devices that enable users to interact with the electronic device 700, or communicate with any device (for example, a network card, a modem, etc.) that makes the electronic device 700 communicate with one or more other electronic devices. Such communication may be executed via an input/output (I/O) interface (not shown).

According to example implementation of the present disclosure, a computer readable storage medium is provided, on which computer executable instructions are stored, where the computer executable instructions is executed by the processor to implement the method described above. According to example implementation of the present disclosure, a computer program product is also provided. The computer program product is physically stored on a non-transient computer-readable medium and includes computer-executable instructions, which are executed by the processor to implement the method described above.

Various aspects of the present disclosure are described herein with reference to the flow chart and/or the block diagram of the method, the apparatus, the device and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, specialized computers or other programmable data processing devices to produce a machine that generates an apparatus to implement the functions/actions specified in one or more blocks in the flow chart and/or the block diagram when these instructions are executed through the computer or other programmable data processing apparatuses. These computer-readable program instructions may also be stored in a computer-readable storage medium. These instructions enable a computer, a programmable data processing apparatus and/or other devices to work in a specific way. Therefore, the computer-readable medium containing the instructions includes a product, which includes instructions to implement various aspects of the functions/actions specified in one or more blocks in the flowchart and/or the block diagram.

The computer-readable program instructions may be loaded onto a computer, other programmable data processing apparatus, or other devices, so that a series of operational steps may be performed on a computer, other programmable data processing apparatus, or other devices, to generate a computer-implemented process, such that the instructions which execute on a computer, other programmable data processing apparatuses, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a unit, a program segment or instructions, which contains one or more executable instructions for implementing the specified logic function. In some alternative implementations, the functions labeled in the block may also occur in a different order from those labeled in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Each implementation of the present disclosure has been described above. The above description is an example, not exhaustive, and is not limited to the disclosed implementations. Without departing from the scope and spirit of the described implementations, many modifications and changes are obvious to ordinary skill in the art. The selection of terms used in the present disclosure aims to best explain the principles, practical application or improvement of technology in the market of each implementation, or to enable other ordinary skill in the art to understand the various embodiments disclosed herein.

## Claims

1. A method (500) for media content interaction, comprising:
in response to a predetermined operation for an application, presenting (510), in the application, media content associated with a target object; and
presenting (520), while presenting the media content, a search entry for the target object and a search keyword associated with the target object.

2. The method of claim 1, wherein presenting (520) the search entry for the target object and the search keyword associated with the target object comprises:
in response to an event related to the media content, switching a presentation mode of the media content from a first mode to a second mode different from the first mode; and
presenting, while presenting the media content in the second mode, the search entry and the search keyword.

3. The method of claim 2, wherein the event comprises at least one of:
a duration of presenting the media content in the first mode reaching a predetermined duration, or
a first predetermined user operation for the media content being received.

4. The method of any of claims 1-3, further comprising:
in response to a search trigger operation for the target object, presenting a search result for the target object, wherein the search result is obtained based on the search keyword.

5. The method of claim 4, wherein at least one of the following is customized for the target object:
a presentation style of the search result, or
at least a portion of content comprised in the search result.

6. The method of claim 4, wherein presenting the search result comprises:
in response to a first search control presented in association with the search entry being triggered, presenting the search result.

7. The method of claim 4, wherein presenting the search result comprises:
in response to the search entry being triggered, presenting a search page comprising a second search control, wherein the search keyword is displayed in a keyword input region of the search page; and
in response to the second search control being triggered while the search keyword is displayed, presenting the search result.

8. The method of any of claims 1-3, wherein the search entry and the search keyword are superposed on the media content.

9. The method of any of claims 1-3, further comprising:
presenting, together with the search entry and the search keyword, one or more operation controls of the application in a predetermined style.

10. The method of any of claims 1-3, further comprising:
stopping presenting the media content, the search entry, and the search keyword in response to at least one of:
all of the media content being presented, or
a second predetermined user operation for switching a presentation content being received; and presenting a further media content that is a non-promotional content.

11. The method of any of claims 1-3, wherein the predetermined operation comprises the application being started.

12. An apparatus (600) for media content interaction, comprising:
a media content presentation module (610) configured to, in response to a predetermined operation for an application, present, in the application, media content associated with a target object; and
a search-related presentation module (620) configured to present, while presenting the media content, a search entry for the target object and a search keyword associated with the target object.

13. An electronic device (700), comprising:
at least one processing unit (710); and
at least one memory (720) coupled to the at least one processing unit (710) and storing instructions executable by the at least one processing unit (710), the instructions, when executed by the at least one processing unit (710), causing the electronic device (700) to perform the method according to any of claims 1 to 11.

14. A computer readable storage medium having a computer program stored thereon, the computer program being executable by a processor to implement the method according to any of claims 1 to 11.

15. A computer program product (725) having a computer program stored thereon, the computer program being executable by a processor to implement the method according to any of claims 1 to 11.
